# EUROPEAN PATENT APPLICATION

(11) **EP 2 779 278 A1**
(43) Date of publication of application: **17.09.2014**
(21) Application number: 13176552.1
(22) Date of filing: 15.07.2013
(51) Int. Cl.: H01M 2/22, H01M 2/34, H01M 10/658

(54) **Rechargeable battery**

(30) Priority: 12.03.2013 US 201361778167 P; 31.05.2013 US 201313907571
(71) Applicant: Samsung SDI Co., Ltd., Yongin-si, Gyeonggi-do (KR)
(72) Inventor: Han, Min-Yeol, Gyeonggi-do (KR); Byun, Sang-Won, Gyeonggi-do (KR); Choi, Soo-Seok, Gyeonggi-do (KR)
(74) Representative: Mounteney, Simon James

(57) **Abstract**

The present invention provides a rechargeable battery, in which a cell fuse is smoothly blown even in a low-current region of a current range, in which the cell fuse needs to be blown, by suppressing heat radiation of a lead tab and the cell fuse and there is provided a rechargeable battery comprising: an electrode assembly; a case for accommodating the electrode assembly; a cap plate coupled to an opening of the case; electrode terminals installed in the cap plate; lead tabs for connecting the electrode assembly to the electrode terminal and including a cell fuse; and heat insulation members covering a part of the lead tab adjacent to the cell fuse.

## Description

### BACKGROUND

### 1. Field

The present invention relates to a rechargeable battery in which a cell fuse is included in a lead tab.

### 2. Description of the Related Art

A rechargeable battery is a battery repeatedly performing charging and discharging, contrary to a primary battery. A rechargeable battery with small capacity may be used in a portable small electronic device, such as a mobile phone, a notebook computer and a camcorder. A rechargeable battery with large capacity may be used as a power source for driving a motor of a hybrid vehicle and an electrical vehicle.

For example, a rechargeable battery includes an electrode assembly for performing charging and discharging, a case accommodating an electrolyte solution and the electrode assembly, a cap plate coupled to an opening of the case, and lead tabs for electrically connecting the electrode assembly to electrode terminals.

In a rechargeable battery cell, at least one of the lead tabs includes a cell fuse between a portion connected to the electrode assembly and a portion connected to the electrode terminal. For example, the cell fuse is blown within a short time in a high-current range, such as an external short circuit, thereby helping to ensure safety in the event of a fault in the rechargeable battery. However, the cell fuse may not be smoothly blown by heat radiation of the lead tab and the cell fuse in a low-current region (for example, less than 2,000 A) of a current range, in which the cell fuse needs to be blown, compared to the high-current region.

The above information disclosed in this Background section is only for enhancement of understanding of the background of the invention and therefore it may contain information that does not form the prior art that is already known in this country to a person of ordinary skill in the art.

### SUMMARY

The present invention has been made in an effort to provide a rechargeable battery, in which a cell fuse is smoothly blown even in a low-current region of a current range, in which the cell fuse needs to be blown, by suppressing heat radiation of a lead tab and the cell fuse. An embodiment of the present invention provides a rechargeable battery including: an electrode assembly; a case for accommodating the electrode assembly coupled to the electrode assembly; a lead tab for connecting the electrode assembly to the electrode terminal and including a cell fuse; and a heat insulation member covering a part of the lead tab adjacent to the opening of the case and a part of the lead tab adjacent to the sidewall of the case.

The heat insulation member is spaced apart from the case.

The lead tab includes a first connection portion connected to the electrode assembly and a second connection portion, bent from the first connection portion, that is connected to the electrode terminal, the cell fuse is formed in the second connection portion, and the heat insulation member covers at least one portion of the first connection portion and the second connection portion.

The rechargeable battery according to the embodiment of the present invention further includes a retainer positioned between the first connection portion of the lead tab and the inner surface of the case. In embodiments of the invention, the retainer is made of a material comprising or consisting essentially of polypropylene.

The heat insulation member further includes a first heat insulation block interposed at least between the first connection portion and the retainer.

The heat insulation member further includes a second heat insulation block covering at least a part of the cell fuse in the second connection portion.

The first heat insulation block is separately formed from the first connection portion and disposed between the first connection portion and the retainer and is fixed in position by the retainer and the first connection portion. In embodiments of the invention, the retainer comprises a fastening portion to fasten the first heat insulation block between the retainer and the first connection portion.

The second heat insulation block is formed of a plate including a protrusion in one surface to cover the second connection portion facing the electrode assembly, and is fixed in position by a hole forming the cell fuse and the protrusion.

The heat insulation member further includes a first heat insulation molding portion formed by insert molding at least the first connection portion.

The heat insulation member further includes a second heat insulation molding portion formed by insert molding at least a part of the cell fuse in the second connection portion.

The first heat insulation molding portion is integrally formed with a circumference of the first connection portion corresponding to the retainer by insert molding the first connection portion.

The second heat insulation molding portion is integrally formed with a circumference of the cell fuse and the hole forming the cell fuse by insert molding the second connection portion.

The heat insulation member includes a first heat insulation covering portion covering at least the first connection portion.

The heat insulation member further includes a second heat insulation covering portion covering at least the cell fuse in the second connection portion.

The first heat insulation covering portion covers a circumference of the first connection portion corresponding to the retainer by covering the first connection portion with a heat insulation film.

The second heat insulation covering portion covers a circumference of the cell fuse by covering the second connection portion with a heat insulation film.

According to the embodiments of the present invention, heat conduction from the lead tab to the cell fuse is smoothly maintained by covering one portion of the lead tab adjacent to the cell fuse with the heat insulation member, so that it is possible to achieve an effect that the cell fuse is smoothly blown even in the low-current region in the current range, in which the cell fuse needs to be blown.

In embodiments of the invention, the heat insulation member is made of a material comprising or consisting essentially of polyimide.

A first aspect of the current invention is disclosed in Claim 1. Further embodiments of this aspect are disclosed in Claims 2 to 15.

### BRIEF DESCRIPTION OF THE DRAWINGS

FIG. 1 is a perspective view of a rechargeable battery according to a first embodiment of the present invention.
FIG. 2 is a cross-sectional view taken along line II - II of FIG. 1.
FIG. 3 is a perspective view of a lead tab of FIG. 2.
FIG. 4 is a cross-sectional view taken along line IV-IV of FIG. 3.
FIG. 5 is a perspective view of a lead tab used in a rechargeable battery according to a second embodiment of the present invention.
FIG. 6 is a cross-sectional view taken along line VI-VI of FIG. 5.
FIG. 7 is a cross-sectional view of a lead tap used for a rechargeable battery according to a third embodiment of the present invention.

### DETAILED DESCRIPTION

Hereinafter, the present invention will be described more fully with reference to the accompanying drawings, in which embodiments of the invention are shown. As those skilled in the art would realize, the described embodiments can be modified in various different ways, all without departing from the scope of the presently claimed invention. Accordingly, the drawings and description are to be regarded as illustrative in nature and not restrictive. Like reference numerals designate like elements throughout the specification.

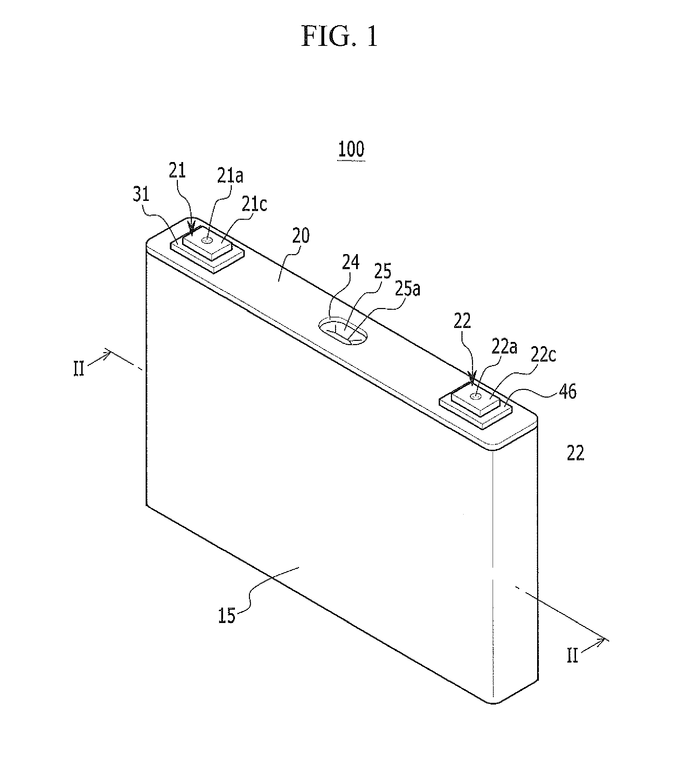

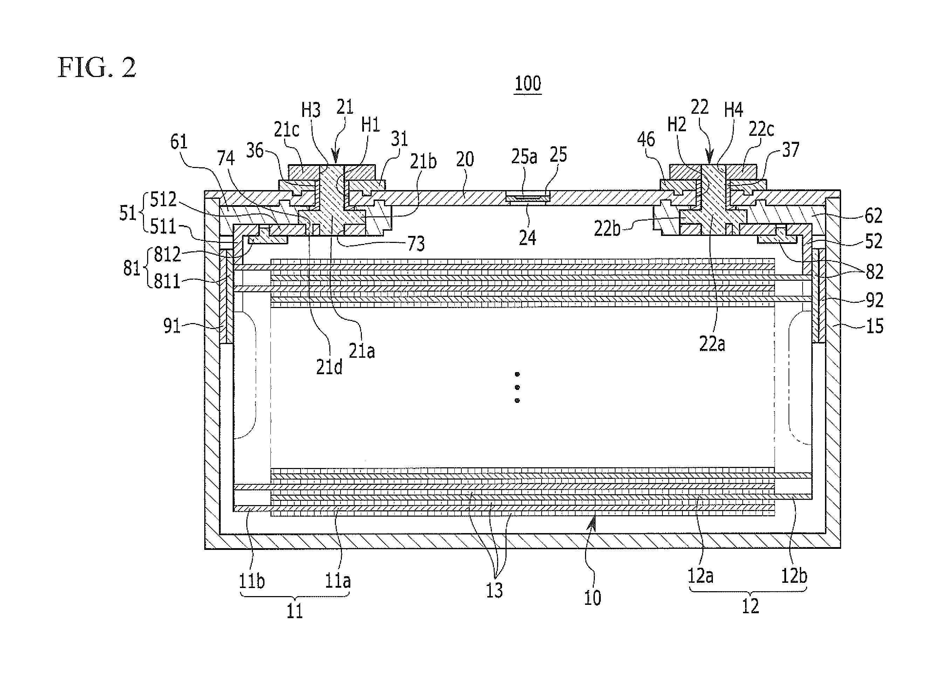

FIG. 1 is a perspective view of a rechargeable battery according to a first embodiment of the present invention, and FIG. 2 is a cross-sectional view taken along line II - II of FIG. 1. Referring to FIGS. 1 and 2, a rechargeable battery 100 according to the first embodiment includes an electrode assembly 10 for charging and discharging current, a case 15 for accommodating the electrode assembly 10 and an electrolyte solution, a cap plate 20 coupled to an opening of the case 15, electrode terminals 21 and 22 installed in the cap plate 20, and lead tabs 51 and 52 for connecting the electrode terminals 21 and 22 to the electrode assembly 10.

For example, the electrode assembly 10 is formed by disposing electrodes (for example, a negative electrode 11 and a positive electrode 12) on both surfaces of a separator 13, which is an insulator, and winding the negative electrode 11, the separator 13, and the positive electrode 12 in a jelly-roll state.

The positive electrode and negative electrode 11 and 12 include coated regions 11a and 12a in which an active material is applied to a current collector of a metal plate, and uncoated regions 11b and 12b which are formed as exposed current collectors because an active material is not applied thereto, respectively.

The uncoated region 11 b of the negative electrode 11 is formed at one end of the negative electrode 11 along the wound negative electrode 11. The uncoated region 12b of the positive electrode 12 is formed at one end of the positive electrode 12 along the wound positive electrode 12. Further, the uncoated regions 11b and 12b are disposed at both ends of the electrode assembly 10, respectively.

The case 15 is shaped like an approximate cuboid so as to set a space for accommodating the electrode assembly 10. The opening of the case 15 is formed at one side of the cuboid, so that the electrode assembly 10 is inserted in the internal space from the outside.

The cap plate 20 is installed in the opening of the case 15 to seal the case 15. For example, the case 15 and the cap plate 20 is formed of aluminum to be welded to each other. That is, the electrode assembly 10 is inserted in the case 15, and then the cap plate 20 is welded to the opening of the case 15.

Further, the cap plate 20 includes one or more openings, and for example, includes terminal holes H1 and H2 and a vent hole 24. The electrode terminals 21 and 22 are installed at the terminal holes H1 and H2 of the cap plate 20 to be electrically connected to the electrode assembly 10.

That is, the electrode terminals 21 and 22 are electrically connected to the negative electrode 11 and the positive electrode 12 of the electrode assembly 10. Accordingly, the electrode assembly 10 is withdrawn to the outside of the case 15 through the electrode terminals 21 and 22.

The electrode terminals 21 and 22 include plate terminals 21 c and 22c disposed outside of the cap plate 20 in correspondence to the terminal holes H1 and H2, and rivet terminals 21 a and 22a electrically connected to the electrode assembly 10 and fastened to the plate terminals 21 c and 22c while passing through the terminal holes H1 and H2.

The plate terminals 21c and 22c have through-holes H3 and H4. The rivet terminals 21 a and 22a are inserted in the through-holes H3 and H4 while passing through the terminal holes H1 and H2 toward an upper end. The electrode terminals 21 and 22 further include flanges 21 b and 22b integrally and widely formed with the rivet terminals 21 a and 22b at an internal side of the cap plate 20.

An external insulation member 31 interposed between the plate terminal 21 c and the cap plate 20 electrically insulates the plate terminal 21 c from the cap plate 20 at a side of the electrode terminal 21 connected to the negative electrode 11. That is, the cap plate 20 maintains a state in which the cap plate 20 is insulated from the electrode assembly 10 and the negative electrode 11.

The insulation member 31 and the plate terminal 21c are fastened to an upper end of the rivet terminal 21a by coupling the insulation member 31 and the plate terminal 21c to the upper end of the rivet terminal 21a and riveting or welding the upper end. The plate terminal 21 c is installed outside the cap plate 20 with the insulation member 31 interposed between the plate terminal 21c and the cap plate 20.

A conductive top plate 46 interposed between the plate terminal 22c and the cap plate 20 electrically connects the plate terminal 22c and the cap plate 20 at a side of the electrode terminal 22 connected to the positive electrode 12. That is, the cap plate 20 maintains a state where the cap plate 20 is electrically connected to the electrode assembly 10 and the anode electrode 12.

The top plate 46 and the plate terminal 22c are fastened to an upper end of the rivet terminal 22a by coupling the top plate 46 and the plate terminal 22c to the upper end of the rivet terminal 22a and riveting or welding the upper end. The plate terminal 22c is installed outside the cap plate 20 with the top plate 46 interposed between the plate terminal 22c and the cap plate 20.

Gaskets 36 and 37 are installed in spaces between the rivet terminals 21 a and 22a of the electrode terminals 21 and 22 and internal surfaces of the terminal holes H1 and H2 of the cap plate 20, to seal and electrically insulate spaces between the rivet terminals 21 a and 22a and the cap plate 20.

The gaskets 36 and 37 are installed while being further extended to spaces between the flanges 21 b and 22b and the internal surface of the cap plate 20 to further seal and electrically insulate spaces between the flanges 21 b and 22b and the cap plate 20. That is, the gaskets 36 and 37 prevent the electrolyte solution from leaking through the terminal holes H1 and H2 used to install the electrode terminals 21 and 22 in the cap plate 20.

The lead tabs 51 and 52 electrically connect the electrode terminals 21 and 22 to the negative and positive electrodes 11 and 12 of the electrode assembly 10, respectively. That is, the lead tabs 51 and 52 are connected to lower ends of the rivet terminals 21a and 22a while being supported by the flanges 21 b and 22b by coupling the lead tabs 51 and 52 to the lower ends of the rivet terminals 21 a and 22a and caulking the lower ends.

The lead tabs 51 and 52 further include cell fuses 71 and 72 for blocking current between the electrode terminals 21 and 22 and the electrode assembly 10. The cell fuses 71 and 72 is formed at the sides of the negative electrode 11 and the positive electrode 12 of the electrode assembly 10 as illustrated, and the cell fuses 71 and 72 is selectively formed at the side of the negative electrode 11 or the positive electrode 12 although not illustrated. While not illustrated, it will be appreciated that one one of the lead tabs is required to contain a cell fuse. Therefore, embodiments of the invention include those where one of the lead tabs contains a cell fuse, while the other lead tab does not.

The cell fuses 71 and 72 are formed so as to be smoothly blown in a current range of the rechargeable battery cell 100 in which the cell fuses 71 and 72 needs to be blown in a high-current region, such as an external short, within a short time and even in a low-current region of the current range (e.g. below 2,000 A). To this end, for example, heat insulation members 81 and 82 are further included in the lead tabs 51 and 52. As noted above, only one of the lead tabs is required to contain a cell fuse.

The heat insulation members 81 and 82 are disposed in a structure in which the heat insulation members 81 and 82 are spaced apart from the case 15 to cover portions of the lead tabs 51 and 52 adjacent to the cell fuses 71 and 72. Accordingly, the heat insulation members 81 and 82 suppress heat radiation from the lead tabs 51 and 52 and conduct heat from the lead tabs 51 and 52 to the cell fuses 71 and 72 to provide a smoother operation of the cell fuses 71 and 72. For example, the heat insulation members 81 and 82 are formed of polyimide having excellent heat resistance and impact resistance. While the material for the heat insulation member is discussed here in respect of the embodiment of FIG. 1 to FIG. 4, polyimide can be used for any heat insulation member (or component thereof) used in any embodiment of the current invention.

In the meantime, the insulation members 61 and 62 are installed between the lead tabs 51 and 52 and the cap plate 20, respectively, to electrically insulate the lead tabs 51 and 52 from the cap plate 20. Further, one side of the insulation members 61 and 62 are coupled to the cap plate 20 and the other side of the insulation members 61 and 62 surround the lead tabs 51 and 52, the rivet terminals 21 a and 22a, and the flanges 21b and 22b, to stabilize a connection structure thereof.

The vent hole 24 is sealed and closed with a vent plate 25 so as to discharge internal pressure and generated gas of the rechargeable battery cell 100. When the internal pressure of the rechargeable battery cell 100 reaches a predetermined pressure, the vent plate 25 is incised to open the vent hole 24. The vent plate 25 has a notch 25a inducing the incision.

In the meantime, retainers 91 and 92 are interposed between the electrode assembly 10 and the case 15 to protect the electrode assembly 10 from external impact. That is, the retainers 91 and 92 support the lead tabs 51 and 52 connected to the electrode terminals 21 and 22, so that the electrode assembly 10 is spaced apart from the case 15 to be buffered and supported. For example, the retainers 91 and 92 are formed of polypropylene, which is light, has a high softening point, and excellent processibility. While the material for the retainers is discussed here in respect of the embodiment of FIG. 1 to FIG. 4, polypropylene can be used for any retainer used in any embodiment of the current invention.

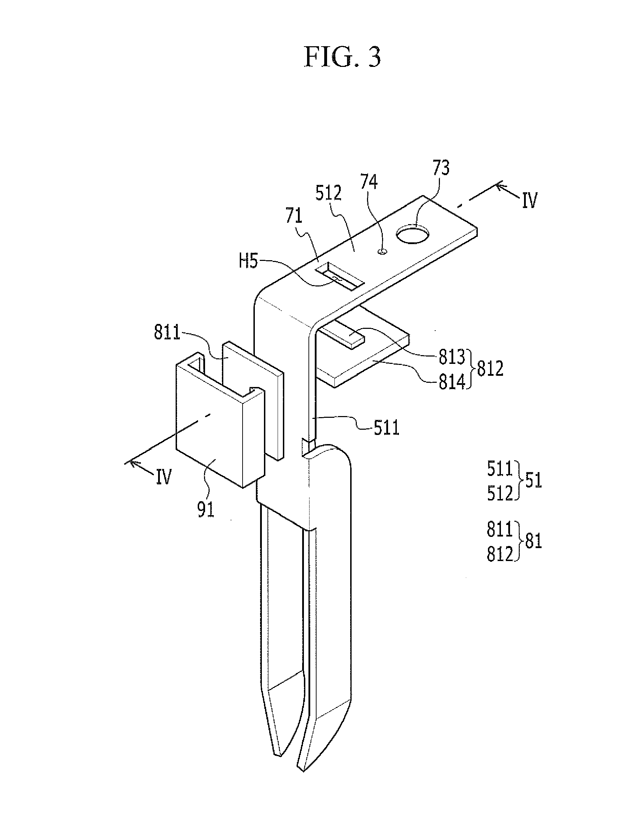

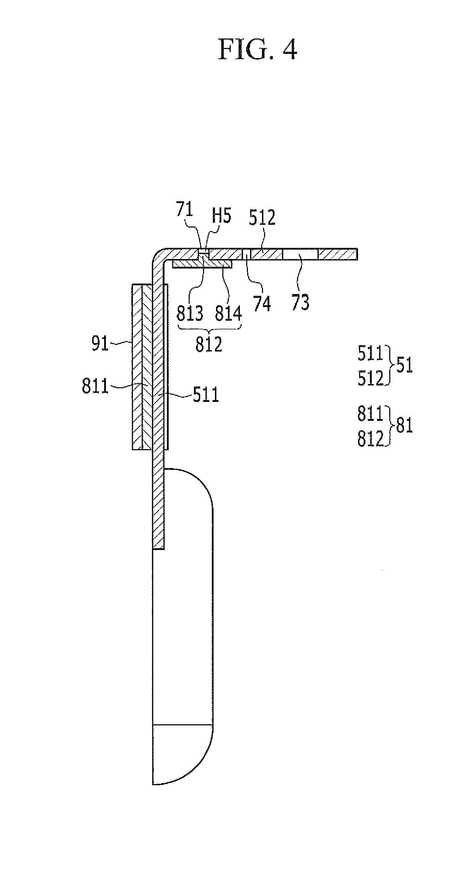

FIG. 3 is a perspective view of a lead tab of FIG. 2, and FIG. 4 is a cross-sectional view taken along line IV-IV of FIG. 3. Since the lead tabs 51 and 52 are formed in the same structure, the lead tab 51 connected to the negative electrode 11 of the electrode assembly 10 will be described hereinafter as an example for convenience of the description.

Referring to FIGS. 3 and 4, the lead tab 51 includes a first connection portion 511 connected to the uncoated region 11b of the negative electrode of the electrode assembly 10, and a second connection portion 512 bent from the first connection portion 511 to be connected to the rivet terminal 21a of the electrode terminal 21.

The second connection portion 512 includes through-openings 73 and 74 to be coupled to a lower end of the rivet terminal 21 a and a lower protrusion 21d of the flange 21 b. The cell fuse 71 is formed with a narrower area than that of a neighboring area in the second connection portion 512 to have higher electric resistance than that of the neighboring area.

The cell fuse 71 increases resistance by piercing a hole H5 having a predetermined area in the second connection portion 512 and removing a conductive portion, so that it is possible to interrupt current between the first and second connection portions 511 and 512.

The heat insulation member 81 covers at least one part between the first connection portion 511 and the second connection portion 512 to suppress radiation of the heat conducted from the lead tab 51 to the cell fuse 71. For convenience, in the first embodiment, a first heat insulation block 811 included in the first connection portion 511 and a second heat insulation block 812 included in the second connection portion 512 will be exemplified.

The first heat insulation block 811 is interposed at least between the first connection portion 511 and the retainer 91, to form a heat insulation structure. That is, the first heat insulation block 811 insulates heat of one surface of the first connection portion 511 to maximally achieve smooth heat conduction from the first connection portion 511 to the second connection portion 512.

The second heat insulation block 812 covers at least a part of the cell fuse 71 in the second connection portion 512 to form a heat insulation structure. That is, the second heat insulation block 812 insulates heat of one surface of the second connection portion 512 to maximally suppress heat radiation of the second connection portion 512 around the cell fuse 71. Further, the second heat insulation block 812 prevents an arc generated when the cell fuse 71 is melted to be blown.

More specifically, the first heat insulation block 811 is separately formed from the first connection portion 511 and disposed between the first connection portion 511 and the retainer 91 to serve heat insulation. Further, the first heat insulation block 811 is fixed to the one surface of the first connection portion 511 by mutual fastening force with which the retainer 91 is fastened to the first connection portion 511 through a hook.

The second heat insulation block 812 is formed as a plate 814 including a protrusion 813 in one surface of the plate 814 to cover the second connection portion 512 facing the electrode assembly 10 with the plate 814. Further, the protrusion 813 is inserted in the hole H5 forming the cell fuse 71, so that the second heat insulation block 812 is fixed to one surface of the second connection portion 512 by forcible fitting force of the protrusion 813 and the hole H5.

The first heat insulation block 811 insulates heat of the first connection portion 511, and the second heat insulation block 812 insulates heat of the second connection portion 512 and the cell fuse 71, so that the heat conduction from the lead tab 51 to the cell fuse 71 is smoothly maintained.

Accordingly, the cell fuse 71 is smoothly blown even in the low-current region of the current range (e.g. below 2,000 A), in which the cell fuse 71 needs to be blown, as well as the high-current region. That is, the cell fuse 71 is blown before the retainer 91 is melted.

Hereinafter, various embodiments of the present invention will be described. The same constitution as that of the first embodiment and the aforementioned embodiment will be omitted, and different constitutions will be described.

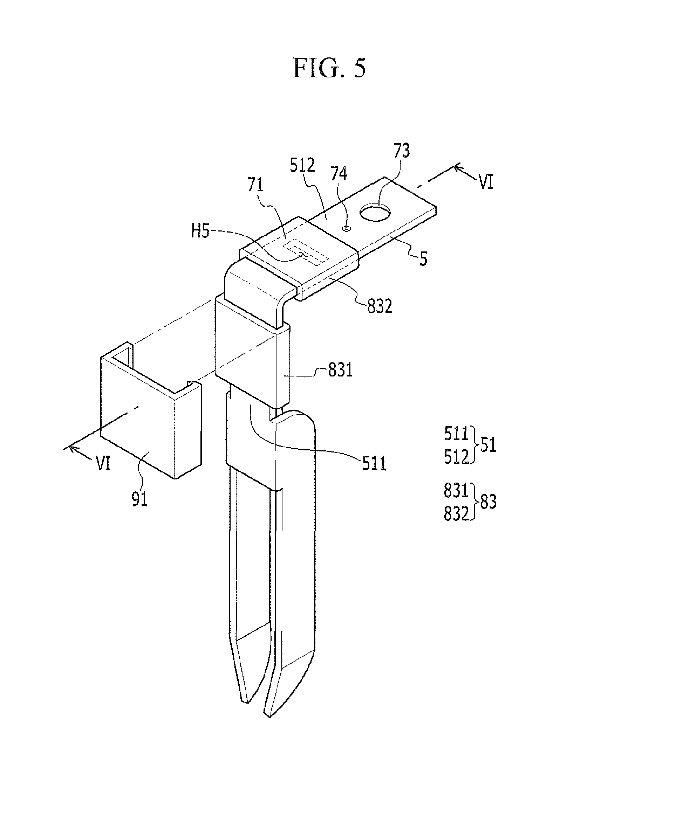

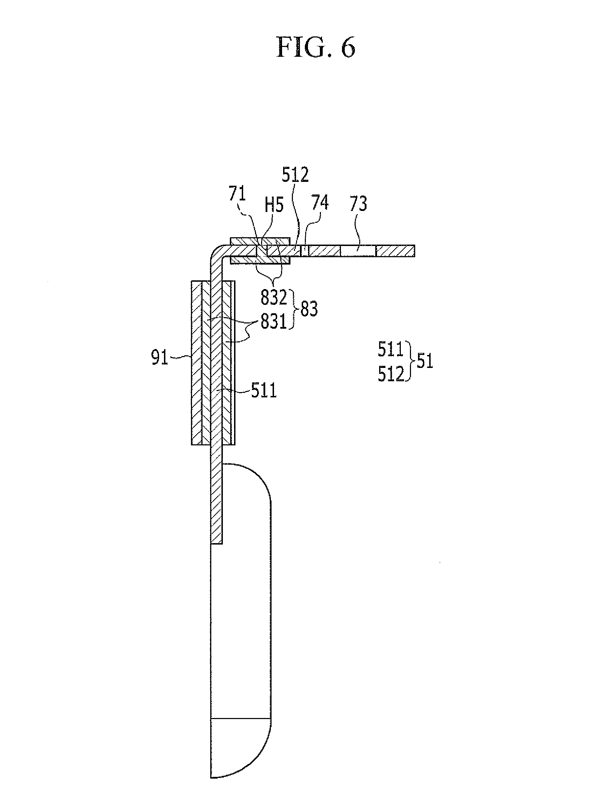

FIG. 5 is a perspective view of a lead tab used in a rechargeable battery according to a second embodiment of the present invention, and FIG. 6 is a cross-sectional view taken along line VI-VI of FIG. 5.

Referring to FIGS. 5 and 6, in a heat insulation member 83 of the second embodiment, a first heat insulation molding portion 831 is integrally formed to a circumference of a first connection portion 511 corresponding to the retainer 91 by insert molding the first connection portion 511. That is, the first heat insulation molding portion 831 serves heat insulation in both surfaces and a side surface of the first connection portion 511 and thus has higher heat insulation efficiency compared to the first heat insulation block 811 of the first embodiment.

A second heat insulation molding portion 832 is integrally formed with a circumference of a cell fuse 71 and a hole H5 forming the cell fuse 71 by insert molding a second connection portion 512. That is, the second heat insulation portion 832 serves heat insulation in both surfaces and side surfaces of the second connection portion 512 and the cell fuse 71 and thus has higher heat insulation efficiency compared to the second heat insulation block 812 of the first embodiment.

The first heat insulation molding portion 831 insulates the heat of both surfaces and the side surface of the first connection portion 511, and the second heat insulation molding portion 832 insulates heat of both surfaces and the side surfaces of the second connection portion 512 and the cell fuse 71, so that heat conduction from the lead tab 51 to the cell fuse 71 is more smoothly maintained. Further, the second heat insulation molding portion 832 prevent an arc generated when the cell fuse 71 is melted to be blown.

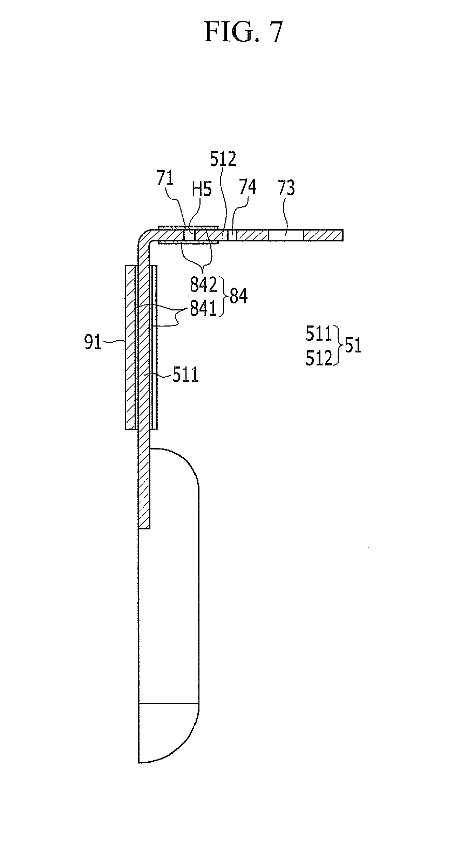

FIG. 7 is a cross-sectional view of a lead tab used in a rechargeable battery according to a third embodiment of the present invention. Referring to FIG. 7, in a heat insulation member 84 in the third embodiment, a first heat insulation covering portion 841 is formed by covering a circumference of a first connection portion 511 with an insulation film and covering the circumference of the first connection portion 511 corresponding to the retainer 91. That is, the first heat insulation covering portion 841 covers the first connection portion 511, so that a manufacturing process is simpler than that of the first heat insulation block 831 of the second embodiment.

A second heat insulation covering portion 842 covers a circumference of the second connection portion 512 and the cell fuse 71 with the heat insulation film. That is, the second heat insulation covering portion 842 covers the second connection portion 512 and the cell fuse 71, thereby achieving a simpler manufacturing process than that of the second heat insulation molding portion 832 of the second embodiment.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

**Description of Reference Numerals Indicating Some Elements in the Drawings**

| | | | |
|---|---|---|---|
| 10: | Electrode assembly | 11: | Negative electrode |
| 11a, 12a: | Coated region | 11b, 12b: | Uncoated region |
| 15: | Case | 20: | Cap plate |
| 21, 22: | Electrode terminal | 21a, 22a: | Rivet terminal |
| 21b, 22b: | Flange | 21c, 22c: | Plate terminal |
| 21d: | Protrusion | 24: | Vent hole |
| 25: | Vent plate | 25a: | Notch |
| 31: | Insulation member | 36, 37: | Gasket |
| 46: | Top plate | 51, 52: | Lead tab |
| 71, 72: | Cell fuse | 73, 74: | Through-opening |
| 81, 82, 83, 84: | Insulation member | 91, 92: | Retainer |
| 100: | Rechargeable battery cell | | |
| 511, 512: | First and second connection portion | | |
| 811: | First heat insulation block | 812: | Second heat insulation block |
| 813: | Protrusion | 814: | Plate |
| 831: | First heat insulation molding portion | | |
| 832: | Second heat insulation molding portion | | |
| 841: | First heat insulation covering portion | | |
| 842: | Second heat insulation covering portion | | |
| H1, H2: | Terminal hole | H3, H4: | Through-hole |
| H5: | Hole | | |

## Claims

1. A rechargeable battery comprising:
an electrode assembly;
a case for accommodating the electrode assembly comprising an opening and a sidewall;
an electrode terminal coupled to the electrode assembly;
a lead tab for the electrode terminal that comprises a cell fuse, said lead tab for connecting the electrode assembly to the electrode terminal; and
a heat insulation member for the lead tab, **characterised in that** the heat insulation member covers a part of the lead tab adjacent to the opening of the case and a part of the lead tab adjacent to the sidewall of the case.

2. The rechargeable battery of Claim 1, wherein the heat insulation member is spaced apart from the case.

3. The rechargeable battery of Claim 1 or Claim 2, wherein the lead tab includes a first connection portion connected to the electrode assembly and a second connection portion, bent from the first connection portion, that is connected to the electrode terminal, the cell fuse is formed in the second connection portion, and the heat insulation member covers at least one portion of the first connection portion and the second connection portion.

4. The rechargeable battery of Claim 3, further comprising a retainer for coupling to the lead tab, wherein the retainer is positioned between the first connection portion of the lead tab and the inner surface of the case.

5. The rechargeable battery of Claim 4, wherein the retainer is made of a material comprising or consisting essentially of polypropylene.

6. The rechargeable battery of any one of Claims 3 to 5, wherein the heat insulation member comprises:
a first heat insulation block, where the first heat insulation block is interposed at least between the first connection portion and the retainer; and/or
a second heat insulation block, where the second heat insulation block covers at least a part of the cell fuse in the second connection portion.

7. The rechargeable battery of Claim 6, wherein the first heat insulation block is separately formed from the first connection portion, is disposed between the first connection portion and the retainer and is fixed in position by the retainer and the first connection portion.

8. The rechargeable battery of Claim 7, as dependent upon Claims 4 and 5, wherein the retainer comprises a fastening portion to fasten the first heat insulation block between the retainer and the first connection portion.

9. The rechargeable battery of any one of Claims 6 to 8, wherein the second heat insulation block is formed of a plate that comprises a protrusion in one surface to cover the second connection portion facing the electrode assembly and is fixed in position by a hole forming the cell fuse and the protrusion.

10. The rechargeable battery of any one of Claims 3 to 5, wherein
the heat insulation member further comprises:
a first heat insulation molding portion formed by insert molding at least the first connection portion; and/or
a second heat insulation molding portion formed by insert molding at least a part of the cell fuse in the second connection portion.

11. The rechargeable battery of Claim 10, wherein:
the first heat insulation molding portion is integrally formed with a circumference of the first connection portion corresponding to the retainer by insert molding the first connection portion; and/or
the second heat insulation molding portion is integrally formed with a circumference of the cell fuse and the hole forming the cell fuse by insert molding the second connection portion.

12. The rechargeable battery of any one of Claims 3 to 5, wherein the heat insulation member further comprises:
a first heat insulation covering portion covering at least the first connection portion; and/or
a second heat insulation covering portion covering at least the cell fuse in the second connection portion.

13. The rechargeable battery of Claim 12, wherein:
the first heat insulation covering portion covers a circumference of the first connection portion corresponding to the retainer by covering the first connection portion with a heat insulation film; and/or
the second heat insulation covering portion covers a circumference of the cell fuse by covering the second connection portion with a heat insulation film.

14. The rechargeable battery of any preceding claim, wherein the heat insulation member is made of a material comprising or consisting essentially of polyimide.

15. The rechargeable battery of any one of Claims 3 to 14, wherein the heat insulation member comprises:
the first insulation heat block of Claims 6 to 9 in combination with the second heat insulation molding portion of Claims 10 and 11 or the second heat insulation covering portion of Claims 12 and 13; or
the first insulation molding portion of Claims 10 and 11 in combination with the second insulation heat block of Claims 6 to 9 or the second heat insulation covering portion of Claims 12 and 13; or
the first heat insulation covering portion of Claims 12 and 13 in combination with the second insulation heat block of Claims 6 to 9 or the second heat insulation molding portion of Claims 10 and 11.
